# EUROPEAN PATENT SPECIFICATION

(11) **EP 0 866 008 B1**
(45) Date of publication and mention of the grant of the patent: **11.12.2002**
(21) Application number: 98301985.2
(22) Date of filing: 17.03.1998
(51) Int. Cl.: B65H 3/06

(54) **Media feed apparatus**
Zuführgerät für Aufzeichungsträger
Dispositif d'alimentation en supports d'information

(30) Priority: 17.03.1997 US 819227
(43) Date of publication of application: 23.09.1998
(73) Proprietor: LEXMARK INTERNATIONAL, INC., Lexington, Kentucky 40511-1876 (US)
(72) Inventor: Embry, Kerry Leland, Lexington, Kentucky 40515 (US); Schmidt, John Anthony, Lexington, Kentucky 40509 (US)
(74) Representative: Leale, Robin George

(56) References cited:
- EP-A- 0 680 903
- EP-A- 0 792 827
- US-A- 5 527 026

## Description

This invention relates to paper and other media feeders.

In our U.S. Patent No. 5,527,026, which represents the closest prior art for the present invention, a paper feed mechanism is disclosed in which pick rollers are driven by a gear train mounted on a arm which is free to pivot around the center of the driven gear of the gear train. This construction automatically applies increasing force on the pick roller until the pick roller moves paper, at which point the downward pressure is automatically relieved.

In practice using the foregoing construction heavy paper lifts the gear train as the paper is fed, thereby causing the gear train to drop under the influence of gravity as such paper or other media leaves the drive roller. This causes bouncing of the drive roller and thus the gear train, which slows reliable operation. This invention is directed to the addition of a damping mechanism which largely restricts the lifting movement, and which slows the dropping on to the paper stack.

According to the present invention there is provided a media feed apparatus comprising
a frame,
a support for media to be fed by said apparatus,
a carrier for a gear train mounted to pivot toward and away from said support around an axis concentric with the driven gear of said gear train,
at least one media feed roller mounted on said carrier for rotation by said gear train, and
a first spring wound around a rotatable element and having an end fixed to said carrier, said spring being arranged to be unwound when said carrier moves away from said support but still being in sufficient frictional contact with said rotatable element to apply frictional drag to said element upon said carrier movement, whereby to resist said movement of said carrier.

Thus, in a preferred form of the invention a bracket carrying the pick gear train is fixed to the end of a first spring wound in a direction to be opened when the bracket moves away from the media tray. That spring is wound around a first cylindrical part of an arbor, and the arbor is mounted for rotation on a shaft which is located on the axis of pivot of the gear train. A second spring is wound on a second cylindrical part of the arbor in a direction to be closed when the bracket moves away from the media tray. The end of the second spring is fixed to a stationary frame. The first spring has a much tighter friction grip on the arbor than the second spring.

In operation, as the driven gear of the drive train is operated for paper picking with the pick roller against the top of the media stack, downward movement is minimal, as is the relatively low friction of the second spring, so the influence of the first and second springs is not material. Upon movement of paper off of the stack, the downward force of the gear train is automatically relieved. Upward movement of the gear train tightens the second spring around an arbor which thereby grips the arbor and causes the arbor to rotate with the rotation of the gear train. If the paper is relatively stiff, an upward force is applied to the gear train, but upward movement is resisted by the high friction of the first spring, limiting the upward movement. This permits the media to move away more smoothly.

The gear train is left unsupported after such upward movement when the media moves past the drive roller. The gear train will then return toward the tray under the influence of gravity. The downward movement tightens the first spring around the arbor which thereby grips the arbor and causes the arbor to rotate with the rotation of the gear train. That downward movement opens the grip of the second spring on the arbor, permitting slipping of the arbor on the second spring. In the embodiment disclosed the light friction grip of the second spring on the arbor results in relatively low friction, which moderately damps the downward movement and reduces bounce. A low friction is desirable since the gear train is also counterbalanced by a spring. The drive roller is thereby settled for driving media much more quickly than if the bounce were not damped.

Where the downward friction is not significant, a single spring may be employed wrapped around a stationary shaft, wound to unwind on upward movement and function as described for the first spring.

An embodiment of the invention will now be described by way of example and with reference to the accompanying drawings, in which:-
Fig. 1 illustrates the damped pick arm from a top perspective view with the arm down as it would be when it rests on a stack of paper;
Fig. 2 is a bottom view of the same configuration as Fig. 1;
Fig. 3 illustrates the springs and arbor;
Fig. 4 is a bottom view with the arm lifted as it would be by stiff paper being fed; and
Fig. 5 illustrates the gears of the gear train.

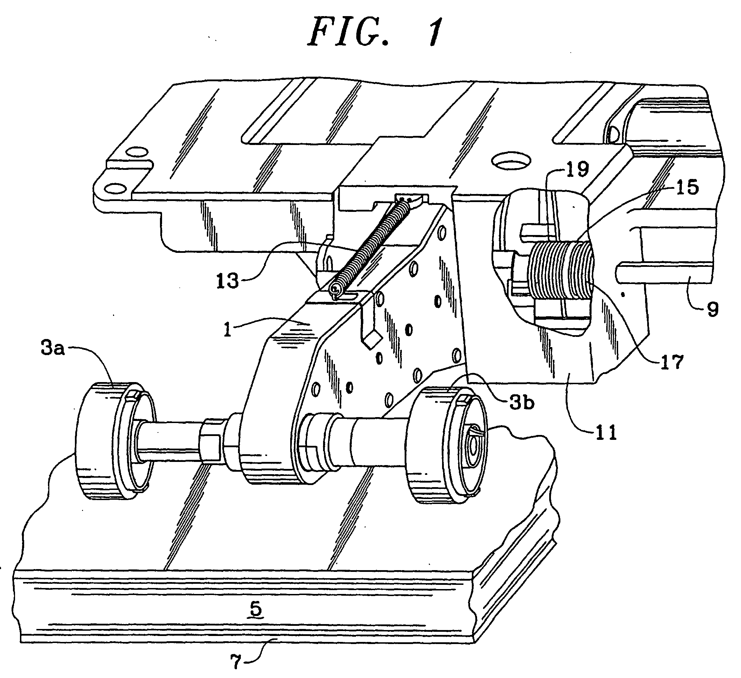

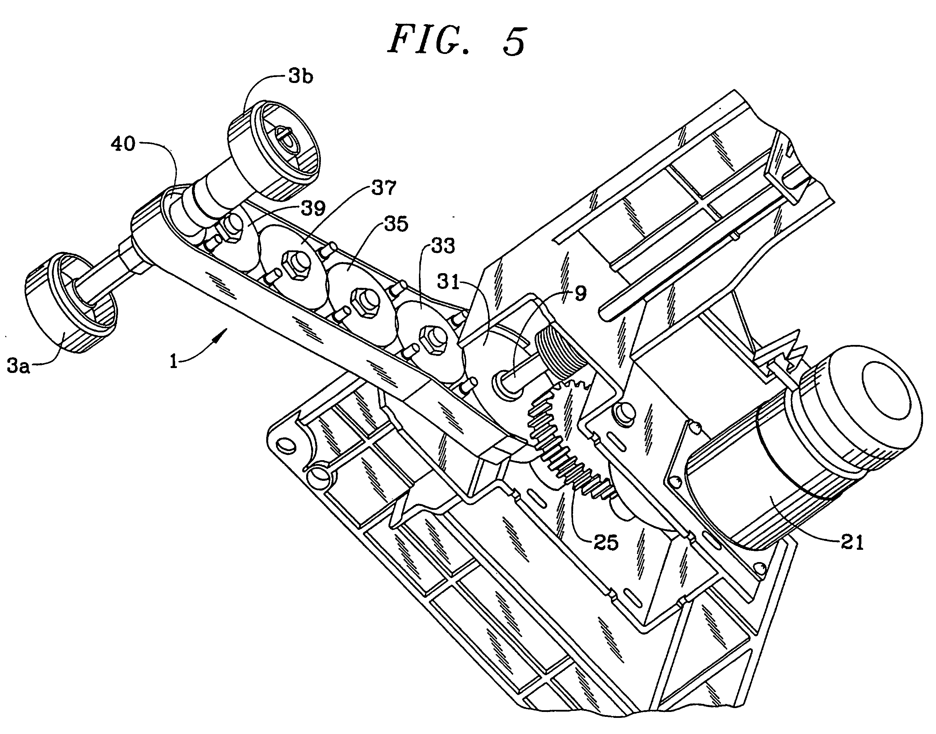

As shown in Fig. 1 a carrier in the form of a bracket 1 which contains a train of gears (shown in Fig. 5) drives symmetrical drive rollers 3a, 3b which contact the top of a stack of paper or other media 5. Paper 5 rests on a flat tray 7, which may be stationary or may be elevated for large stacks of media 5. Bracket 1 is mounted to pivot around a driven gear, as is described in the foregoing U.S. Patent No. 5,527,026. A shaft 9 is mounted in a stationary frame 11 and is coaxial with the pivot point of bracket 1.

Coil spring 13 is connected between bracket 1 and frame 11 to provide an upward, counterbalance force to bracket 1, which, however, does not overcome the force of gravity. Bracket 1 therefore is constructed to drop under the force of gravity, at an acceleration reduced by the force of spring 13 until rollers 3a, 3b encounter paper 5.

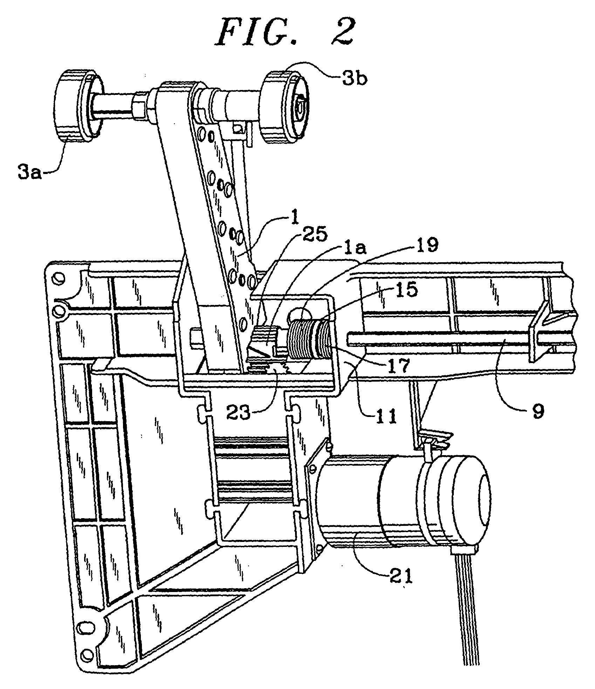

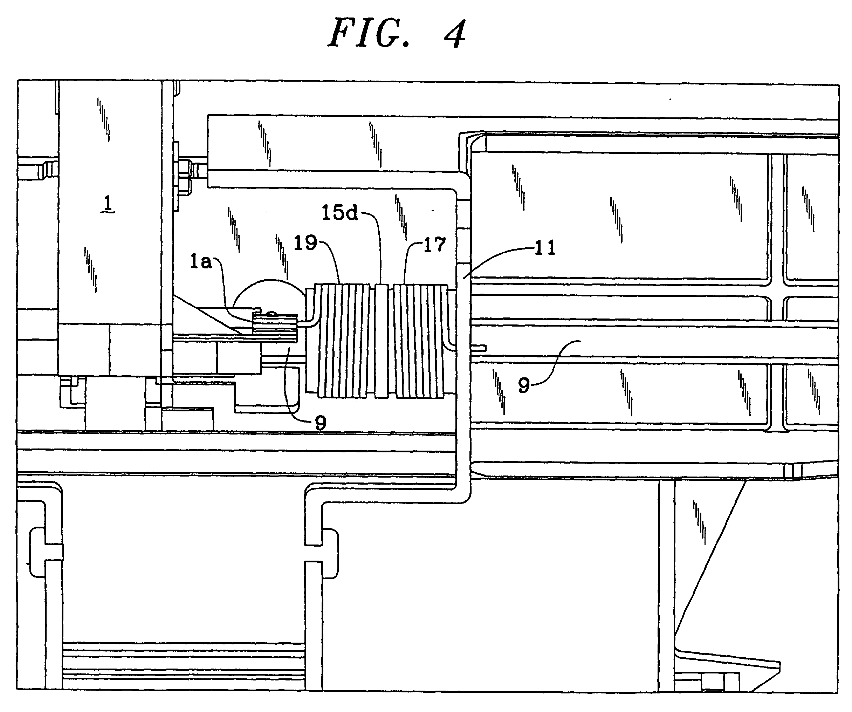

The broken away part of Fig. 1 shows arbor 15 having a spring 19 wrapped on the side of arbor 15 near bracket 1 and a spring 17 wrapped on the side of arbor 15 away from bracket 1. As better shown in Fig. 4, spring 19 has an end held in an extension 1a of bracket 1, and spring 17 has an end held in frame 11. Fig. 2 shows a motor 21 attached to frame 11 which drives a series of gears (only gears 23 and 25 shown) which drive the gear train in bracket 1.

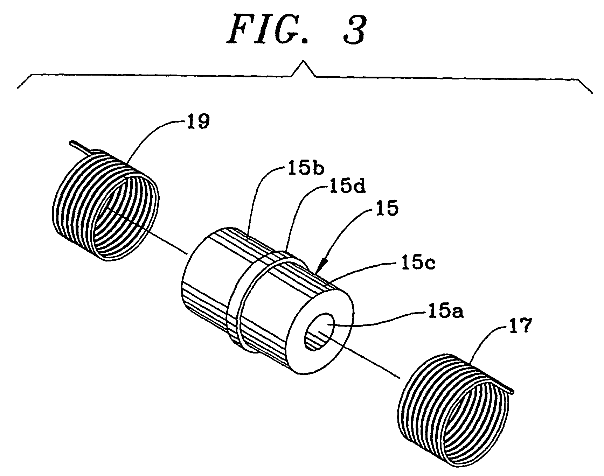

Fig. 3 shows in more detail the arbor 15 in exploded relationship with the springs 17 and 19 as they are installed. Arbor 15 has a central hole 15a which receives shaft 9 in a close, but not tight, fit. Arbor 15 has a left cylindrical part 15b and a right cylindrical part 15c and a central ridge 15d. In this embodiment the cylindrical parts 15b and 15c are the same diameter. Springs 17 and 19 in this embodiment are of identical material and cross section. However, spring 17 is loosely held by part 15c (specifically, with the outside diameter of arbor part 15c being nominally 14.17 mm and the inside diameter of spring 17 being nominally 14.08 mm). Spring 19 is much more tightly held by part 15b (specifically with the outside diameter of arbor part 15b being also nominally 14.17 mm and the inside diameter of spring 17 being nominally 13.75 mm).

Fig. 4 is a bottom view showing the assembly when bracket 1 is moved upward away from media 5. This tends to occur in operation when stiff paper or other media 5 is fed. During such feeding media 5 is grasped by feed rollers or the like (not shown) downstream of bracket 1, which apply sufficient moving force for the media 5 to lift bracket 1 upward. Comparison of Fig. 1 and Fig. 4 illustrates that the spring 19 is unwound by the upward movement toward the Fig. 4 position. The upward movement tightens spring 17 in the manner of a standard spring clutch to cause arbor 15 to move with bracket 1. The unwinding of spring 19 results in slippage of spring 19 around arbor 15, and the friction is relatively high since spring 19 is tightly wound around arbor 15. Bracket 1 is moved upward, but in an amount restricted by the friction of spring 19.

As the media 5 is moved, bracket 1 will cease to be held up by media 5 and bracket 1 will then move down toward tray 7 under the influence of gravity. This movement will tighten spring 19 in the manner of a standard spring clutch. The tightened spring 19 will grasp arbor 15 and force it to rotate with bracket 1. That rotation of arbor 15 will tend to unwind spring 17. Spring 17 being lightly wound on arbor 15, the friction drag of spring 17 on arbor 15 will be moderate, thereby damping the movement of bracket 1 and shortening the time to when bracket 1 is settled in place and another feeding of media 5 can occur. Moderate friction is appropriated as bracket 1 is counterbalanced by spring 13, which also reduces downward movement of bracket 1.

Fig. 5 illustrates the gears in bracket 1 by removal of one side of bracket 1. Driven gear 31 is driven by motor 21 through gear 25 and is journaled on shaft 9. Rotation of gear 31 on shaft 9 permits bracket 1 to rotate as has been described. A gear train exists of gear 31 which drives gear 33. Gear 33 drives gear 35. Gear 35 drives gear 37. Gear 37 drives gear 39, and gear 39 drives gear 41, which drives rollers 3a and 3b. (Rollers 3a and 3b are driven through a one-way clutch so as to move freely when downstream rollers move media 5 faster than the driven speed of rollers 3a and 3b.)

It will be apparent that the parts of arbor 15 on which the springs 17 and 19 are wound may differ in diameter or the springs 17 and 19 may differ in composition or cross section since the essential design feature is that spring 17 provide sufficient friction to limit downward movement of the gear train and spring 19 provide significant friction to limit upward movement of the gear train, while both springs 17 and 19 are effective to grasp and turn arbor 5 when each spring 17 or 19 is tightened.

It will also be apparent that if the downward restraint of the spring 17 is not deemed needed, spring 17 could be replaced with a one-way ratchet mechanism. Also, the ends of springs 17 and 19 could be wrapped tightly around stationary extensions, rather than having spring ends fitting in holes.

## Claims

1. A media feed apparatus comprising
a frame (11),
a support (7) for media (5) to be fed by said apparatus,
a carrier (1) for a gear train (31-41) mounted to pivot toward and away from said support around an axis concentric with the driven gear (31) of said gear train,
at least one media feed roller (3) mounted on said carrier for rotation by said gear train, **characterised in that**
a first spring (19) is wound around a rotatable element (15) and having an end fixed to said carrier, said spring being arranged to be unwound when said carrier moves away from said support but still being in sufficient frictional contact with said rotatable element to apply frictional drag to said element upon said carrier movement, whereby to resist said movement of said carrier.

2. Apparatus as claimed in claim 1, further comprising
a shaft (9) mounted to said frame (11) with the center of said shaft concentric with said driven gear (31),
said rotatable element (15) comprising an arbor mounted on said shaft on a central hole (15a) of said arbor, said arbor having a first cylindrical part (15b) near said carrier (1) and a second cylindrical part (15c),
said first spring (19) being wound on said first part of said arbor, and
a second spring (17) wound on said second part of said arbor, having an end fixed to said frame, and arranged to be further wound when said carrier moves away from said support.

3. Apparatus as claimed in claim 2, wherein said second spring (17) is wound in light contact with said second part (15c) of said arbor (15) so as to apply sufficient frictional drag to said arbor when said carrier (1) moves toward said support to reduce bounce of said carrier.

4. Apparatus as claimed in claim 2 or 3, in which said first and second parts (15b,15c) of said arbor (15) have substantially the same outside diameter and said first spring (19) is wound in a tight fit around said first part of said arbor.

## Patentansprüche

1. Medienzufuhrvorrichtung, umfassend
einen Rahmen (11),
eine Auflage (7) für von der Vorrichtung zuzuführende Medien (5),
einen Träger (1) für ein Rädergetriebe (31-41), der so angebracht ist, dass er in Richtung auf die Auflage und weg von ihr um eine zum getriebenen Zahnrad (31) des Rädergetriebes konzentrische Achse schwenkt,
mindestens eine Medienzufuhrrolle (3), die auf dem Träger zur Drehung durch das Rädergetriebe angebracht ist,
**dadurch gekennzeichnet, dass**
eine erste Feder (19) um ein Drehelement (15) gewickelt ist und ein Ende aufweist, das an dem Träger befestigt ist, wobei die Feder so angeordnet ist, dass sie abgewickelt wird, wenn sich der Träger von der Auflage weg bewegt, aber noch in ausreichender Reibungsberührung mit dem Drehelement ist, um bei der Trägerbewegung eine Reibungswiderstandskraft auf das Element auszuüben, um dadurch gegen die Bewegung des Trägers Widerstand zu leisten.

2. Vorrichtung nach Anspruch 1, weiter umfassend
eine Welle (9), die an dem Rahmen (11) angebracht ist, wobei die Mitte der Welle zu dem getriebenen Zahnrad (31) konzentrisch ist,
wobei das Drehelement (15) einen Dorn umfasst, der auf einer Mittenbohrung (15a) des Dorns auf der Welle angebracht ist, wobei der Dorn einen ersten zylindrischen Teil (15b) in der Nähe des Trägers (1) und einen zweiten zylindrischen Teil (15c) aufweist,
wobei die erste Feder (19) auf dem ersten Teil des Dorns aufgewickelt ist und
eine zweite Feder (17), die auf dem zweiten Teil des Dorns aufgewickelt ist, ein Ende aufweist, das an dem Rahmen befestigt ist und so angeordnet ist, dass es weiter gewickelt wird, wenn sich der Träger von der Auflage weg bewegt.

3. Vorrichtung nach Anspruch 2, bei der die zweite Feder (17) in leichter Berührung mit dem zweiten Teil (15c) des Dorns (15) gewickelt ist, um eine ausreichende Reibungswiderstandkraft auf den Dorn auszuüben, wenn sich der Träger (1) in Richtung auf die Auflage bewegt, um einen Aufprall des Trägers zu verringern.

4. Vorrichtung nach Anspruch 2 oder 3, bei der der erste und zweite Teil (15b, 15c) des Dorns (15) im Wesentlichen denselben Außendurchmesser aufweisen und die erste Feder (19) in einer festen Passung um den ersten Teil des Dorns gewickelt ist.

## Revendications

1. Dispositif d'alimentation en supports d'information, comprenant :
un châssis (11),
un plateau (7) pour porter les supports d'information (5) à distribuer par le dit dispositif,
un bras (1) pour loger un train d'engrenages (31-41), le dit bras étant monté de façon à pivoter vers le dit plateau et à l'opposé de celui-ci, autour d'un axe concentrique au pignon entraîné (31) du dit train d'engrenages,
au moins un rouleau de distribution de support d'information (3) monté sur le dit bras pour mise en rotation par le dit train d'engrenages,
**caractérisé en ce que** :
un premier ressort (19) est enroulé autour d'un élément tournant (15) et possède une extrémité fixée au dit bras, le dit ressort étant agencé de façon à se dérouler lorsque le dit bras s'éloigne du dit plateau porteur mais restant en contact de friction suffisant avec le dit élément tournant pour appliquer un freinage par friction au dit élément lors du mouvement du dit bras, de façon à résister au dit mouvement du dit bras.

2. Dispositif selon la revendication 1, comprenant en outre :
un arbre (9) monté sur le dit châssis (11), le centre du dit arbre étant concentrique au dit pignon entraîné (31),
le dit élément tournant (15) comprenant un manchon monté sur le dit arbre qui passe dans un alésage central (15a) du dit manchon, le dit manchon présentant une première partie cylindrique (15b) prés du dit bras (1) et une deuxième partie cylindrique (15c),
le dit premier ressort (19) étant enroulé sur la dite première partie du dit manchon, et
un deuxième ressort (17) enroulé sur la dite deuxième partie du dit manchon, ayant une extrémité fixée au dit châssis, et agencé de manière à s'cnrouler davantage lorsque le dit bras s'éloigne du dit plateau de support

3. Dispositif selon la revendication 2, dans lequel le dit deuxième ressort (17) est enroulé en contact léger avec la dite deuxième partie (15c) du dit manchon (15) de façon à appliquer un freinage par friction suffisant au dit manchon lorsque le dit bras (1) se déplace vers le dit plateau de support, afin de réduire le rebond du dit bras.

4. Dispositif selon la revendication 2 ou 3, dans lequel les dites première et deuxième parties (15b, 15c) du dit manchon (15) ont sensiblement le même diamètre extérieur, et le dit premier ressort (19) est enroulé en ajustement serré autour de la dite première partie du dit manchon.
